# EUROPEAN PATENT APPLICATION

(11) **EP 3 029 560 A1**
(43) Date of publication of application: **08.06.2016**
(21) Application number: 14290362.4
(22) Date of filing: 02.12.2014
(51) Int. Cl.: G06F 3/0484

(54) **A user interface interaction system and method**

(71) Applicant: ALCATEL LUCENT, 92100 Boulogne-Billancourt (FR)
(72) Inventor: Godon, Marc Bruno Frieda, 2018 Antwerpen (BE)
(74) Representative: Plas, Axel Ivo Michel

(57) **Abstract**

A user interface interaction system (100; 200) comprises:
- an interface to a display (101; 201) configured to display items in a browsable screen, i.e. a screen enabling a user to interactively scroll through successive subsets of items in order to find items of relevance;
- an interface to an application processor (103; 203) configured to receive search criteria from the user; and
- a display controller (102; 202) responsive to the application processor (103; 203) and configured to apply a foreshadow to items displayed in the browsable screen that meet the user's search criteria.

The display controller (102; 202) is further configured to variably adapt browse interaction in function of a distance between a pointer position in the browsable screen and the position of the next item that meets the search criteria.

## Description

### Technical Field

The present invention generally relates to user interface interaction, i.e. man-machine interaction in situations where a user of a device with display is browsing through displayed items in order to examine these items and find items of relevance.

### Background

Browsing consists in examining a number of items displayed in a screen in order to find items of interest. Usually, the screen cannot display all items at ones. The items are then made browsable through scrolling: subsets of items are successively displayed in the screen and the user can scroll through these subsets either continuously, e.g. the subsets of items are part of a single page, or discontinuously, e.g. the subsets of items are part of different pages.

Browsing through a large collection of items like for instance text items or images in large webpages, large text files such as software source code files, large sets of photos or images, video files, sound files, etc. typically requires a lot of attention, high concentration and visual focus of the user. The ability to swap between a limited view on the selected items and a full view on the whole selection of items, e.g. through a zoom-in or zoom-out function, requires a mental switch of the user demanding even more concentration. The user-machine interaction while browsing in other words is exhaustive which leads to errors: certain items of relevance are not found.

### Summary

It is an objective of the present disclosure to improve user interface interaction while browsing. More particularly, it is an objective of the present disclosure to reduce the level of attention, concentration and visual focus that is required of users during a browsing activity Furthermore, it is an objective to reduce the number of errors made while browsing large digital resources or, in other words, to improve the efficiency of browsing.

Embodiments of the invention disclose a user interface interaction system as defined by claim 1, comprising:
- an interface to a display configured to display items in a browsable screen;
- an interface to an application processor configured to receive search criteria;
- a display controller responsive to the application processor and configured to apply a foreshadow to items displayed in the browsable screen that meet the search criteria;
- the display controller being configured to variably adapt browse interaction in function of a distance, in a direction substantially equal to the browsing direction, between a pointer position in the browsable screen and an item position in the browsable screen of an item that meets the search criteria.

Thus, embodiments of the invention enhance the efficiency of browsing by applying foreshadowing, i.e. an extra visual mark, to items of relevance, and by variably adapting the browse interaction, i.e. the required energy to reach a marked item, in function of the distance from the current cursor/pointer position or from the current view to the next marked item. The closer the user gets to a marked item ahead, i.e. a marked item lying in the direction wherein the user is currently browsing or in a direction that deviates from the browsing direction within certain boundaries, e.g. plus or minus 10 degrees, the more energy the user interface interaction system will require from the user. Marked items, i.e. items that are of relevance because they match with search criteria entered by the user and which are therefore foreshadowed, hence shall exercise a hill effect slowing down the browsing. Such slow down automatically attracts the user's attention, and enables to improve visual focus and concentration of the user. As a consequence, chances that the user will find the item of relevance will increase substantially as a result of which the browsing efficiency will improve.

In advanced embodiments of the user interface interaction system, the foreshadowing and the adaptive tuning of the browse interaction may depend on the hierarchy or priority of the approached item of relevancy in the search result set. Indeed, depending on the number of search criteria that match, an item of relevance may be assigned a priority or hierarchical level in the search result set. This hierarchical level or priority may then be used to control the foreshadowing, e.g. different foreshadow colours may be.assigned to different priorities, and to control the adapted browse interaction, e.g. more energy may be needed to approach a marked item that has a higher priority in the search result list.

According to an optional aspect of the user interface interaction system, defined by claim 2, the display controller comprises a touchscreen controller adapted to reduce browse effect in said browsable screen per wipe if the distance between pointer position and item position is reducing.

Thus, the hill effect when approaching marked items of relevance may be realised by slowing down the effect of wiping along a touchscreen. More wipes will be needed to achieve the same browsing effect.

According to an alternative or supplemental optional aspect of the user interface interaction system, defined by claim 3, the display controller comprises a screen controller adapted to reduce browse effect in the browsable screen per mouse scroll if the distance between pointer position and item position is reducing.

This way, the hill effect when approaching foreshadowed items may be realised by slowing down the effect of mouse scrolling. More mouse scrolls will be needed to achieve the same browsing effect.

According to another alternative or supplemental optional aspect, defined by claim 4, the user interface interaction system comprises an interaction interface controller comprising an audio controller adapted to produce an audible Doppler effect which is to increase frequency of the audible effect if the distance between pointer position and item position is reducing.

Hence, the hill effect when approaching foreshadowed items may be realised or assisted by audio. Approaching a marked item will increase the frequency of the audible feedback, resulting in a Doppler effect on the user.

According to still another alternative or supplemental optional aspect, defined by claim 5, the user interface interaction system comprises an interaction interface controller comprising a screen controller adapted to produce a visible periodic alternating effect and to vary the frequency of the visible effect if the distance between pointer position and item position is reducing.

Thus, similar to audible effects, the hill effect when approaching marked items may be realised or assisted by visible effects. The frequency of these visible effects varies when approaching the marked item. A visible effect analogue to the audible Doppler effect is created when the frequency of the periodic alternation is increased when the distance between the pointer and item position is reduced. As such, it appears as if the displayed item is sending out an audible and/or visible wave signal. When the marked item is approached, the frequency of the wave signal is changing. As an example, the colour of the indication could vary when approaching the marked item: the indication may for instance be green and become blue when the pointer on the screen is approaching the marked item. In another example, the intensity of the indication could vary, i.e. increase when approaching a marked item. The intensity then becomes an indication of the hill effect, i.e. the required energy to approach the item. In yet another example, the visual effect lies in a blinking light indication. The blinking light's frequency may be increasing when the pointer comes closer to the marked item and thus the blinking light acts as a sonar or radar, i.e. a warning light for collision of the pointer with the marked item. It is further noticed that the visual effect of a marked item may be assigned a base frequency reflecting its priority or hierarchy amongst the search results. Thus, not all audible or visual effects applied to marked items need to have the same frequency or the same frequency change when the item is approached. The frequency and/or frequency change of the audible and/or visual effects may depend on the extent to which the marked item matches the search criteria.

According to a further alternative or supplemental optional aspect, defined by claim 6, the user interface interaction system comprises an interaction interface controller comprising a tactile haptic controller adapted to produce tactile user feedback and to increase frequency of the tactile user feedback if the distance between pointer position and item position is reducing.

The hill effect when approaching a marked item consequently also can be realised or assisted by tactile feedback to the user, such as for instance vibrations. The frequency of these vibrations increases when approaching the marked item.

In addition to a user interface interaction system, embodiments of the present invention also concern a method for user interface interaction as defined by claim 7, comprising:
- sending via an interface to a display instructions to display items in a browsable screen;
- receiving search criteria via an interface to an application processor;
- applying a foreshadow to items that meet the search criteria; and
- variably adapting browse interaction in function of a distance, in a direction substantially equal to the browsing direction, between a pointer position in the browsable screen and an item position in the browsable screen of an item that meets the search criteria.

The disclosure further concerns a data processing system as defined by claim 8, comprising means for carrying out the user interface interaction method.

In addition, the disclosure concerns a computer program as defined by claim 9, comprising software code adapted to perform the user interface interaction method, and a computer readable storage medium as defined by claim 10, comprising such computer program.

### Brief Description of the Drawings

Fig. 1 illustrates a first embodiment of the user interface interaction system according to the present invention;
Fig. 2 illustrates a second embodiment of the user interface interaction system according to the present invention;
Fig. 3 illustrates foreshadowing as applied by the first and second embodiments of the user interface interaction system respectively illustrated by Fig. 1 and Fig. 2; and
Fig. 4 schematically illustrates a suitable computing system for executing embodiments of the computer-implemented user interface interaction method according to the invention.

### Detailed Description of Embodiment(s)

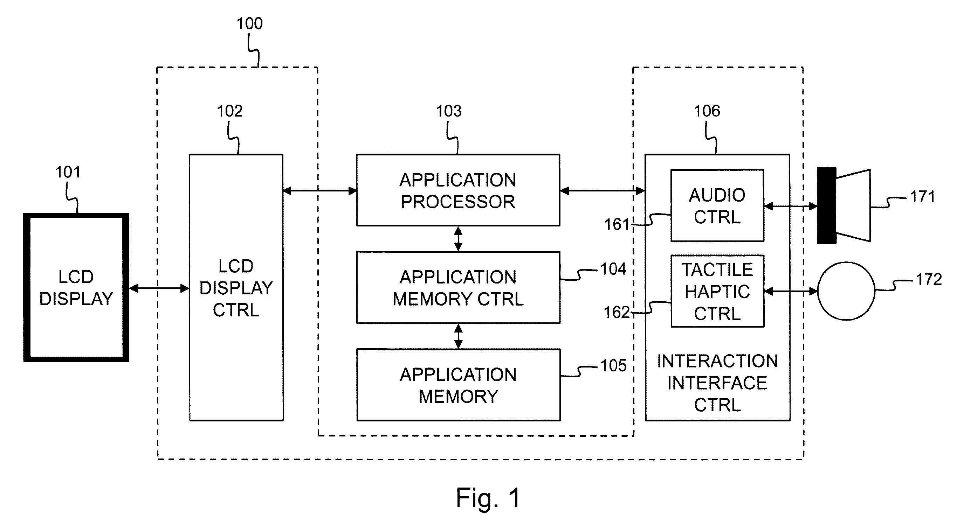

Fig. 1 shows a user interface interaction system comprising an LCD display 101, an LCD display controller 102, an application processor 103, an application memory controller 104, an application memory 105, an interaction interface controller 106, a speaker 171 and a tactile haptic interface 172. The interaction interface controller 106 comprises an audio controller 161 and a tactile haptic controller 162. The LCD display controller 102 and the interaction interface controller 106 jointly constitute an embodiment 100 of the user interface interaction system according to the present invention.

The application interface controller 103 receives search criteria from a user. The search criteria for instance may be keywords, search strings, ranges, a combination of search strings and logical operator such as "AND", "OR", "NOR", etc. The search criteria are obtained from the user for instance because the user enters them into the search field displayed by a web browser, because the user enters them in the text search field or window of a search application running on a computer, tablet or smart mobile device, because the user selects them from a drop list displayed, because the user selects them through checking check boxes or radio buttons, etc.

The application processor 103 in cooperation with the application memory 105 via the application memory controller 104 identifies and temporarily stores all items that will be displayed to the user in a browsable screen. This may for instance be a large collection of images. Amongst the items that will be displayed, the application processor identifies the items that meet the user's search criteria. The application processor 103 shares the items to be displayed as well as information identifying the items that meet the search criteria with the LCD display controller 102.

The LCD display controller 102 controls LCD display 101 such that the items to be displayed become displayed in a browsable screen. The LCD display controller 102 in other words instructs the LCD display 101 to display a first subset of items, e.g. the first 10 images. In order to change the subset of items that is displayed, the user must browse. Through mouse scrolls for instance, the user can instruct the LCD display controller 102 to change the subset of items that is displayed, e.g. the successive subsets of 10 images that are displayed.

Amongst the items that are displayed, the LCD display controller 102 further applies a foreshadow to items that match the user's search criteria. The foreshadow may be a single colour transparent visual mask that is laid over the item that is displayed. Alternatively, the foreshadow may have different colours depending on the extent to which an item meets the user's search criteria. An item that meets only part of the user's search criteria may for instance be foreground shaded in yellow whereas a green foreground shade may be applied to items that meet all search criteria of the user. The LCD display controller 102 instructs the LCD display 101 to display the items with the applied foreshadow. The visual foreshadow will make it easier for the user to discriminate relevant items that match his/her search criteria from other items when large collections of items have to be browsed.

In addition, the LCD display controller 102 will variably adapt the browsing speed in function of the distance between the cursor or mouse pointer position and the next item marked with foreshadow. The closer the cursor or pointer comes to the next marked item, the more mouse scrolls will be required to browse a certain distance on the screen. The user consequently experiences interaction slow down. Such slow down attracts his attention, enables to improve the focus and consequently increases the probability that a user will notice the next item with foreshadow that matches his/her search criteria.

In parallel, the interaction interface controller 106 will control a speaker 171 and tactile haptic interface element 172, e.g. a vibrating element in the mouse, to produce an effect indicating to the user that he/she is approaching the next marked item in the browsable screen. The audio controller 161 that forms part of the interaction interface controller 106 shall for instance control the speaker 171 to produce an audible Doppler effect the frequency of which is increasing when the browsing distance to the next marked item in the browsable screen is reducing. Simultaneously, the tactile haptic interface controller 162 shall control the tactile haptic interface element 172 to vibrate with increasing frequency or increasing amplitude when the browsing distance to the next marked item in the screen is reducing. The foreshadow together with the hill effect, i.e. more browsing energy is required from the user to approach a marked item, further enhanced with tactile and/or audible feedback to the user minimizes the chances that a user browsing a large collection of items will miss an item matching his/her search criteria. This is achieved without requiring the user to switch between a full view or limited view as is the case with a zoom-in / zoom-out function.

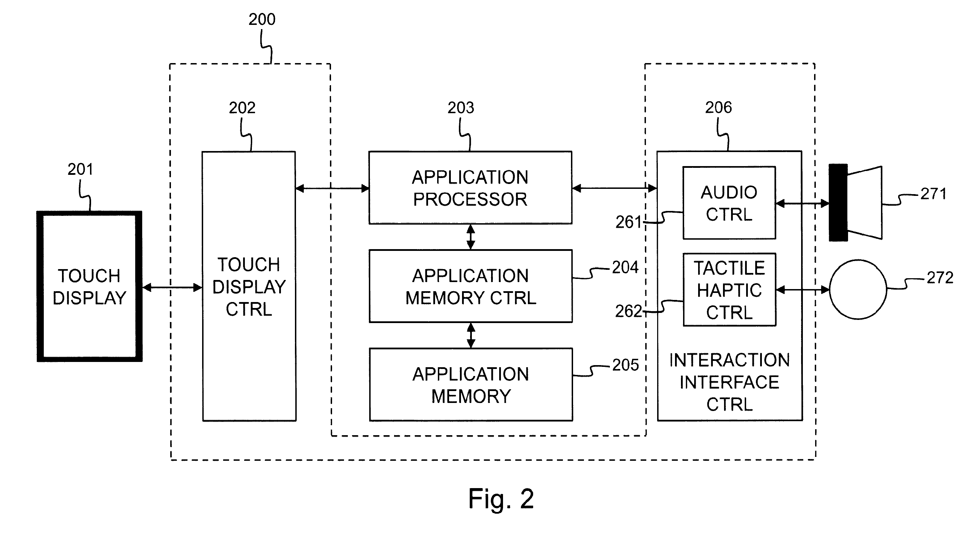

Fig. 2 shows a user interface interaction system comprising an touch sensitive display 201, a touch display controller 202, an application processor 203, an application memory controller 204, an application memory 205, an interaction interface controller 206, a speaker 271 and a tactile haptic interface 272. The interaction interface controller 206 comprises an audio controller 261 and a tactile haptic controller 262. The touch display controller 202 and the interaction interface controller 206 jointly constitute an embodiment 200 of the user interface interaction system according to the present invention.

The application interface controller 203 receives search criteria from a user. The search criteria for instance may be keywords, search strings, ranges, a combination of search strings and logical operator such as "AND", "OR", "NOR", etc. The search criteria are obtained from the user for instance because the user enters them into the search field displayed by a web browser, because the user enters them in the query field or window of a search application running on a computer, tablet or smart mobile device, because the user selects them from a drop list displayed, because the user selects them through checking check boxes or radio buttons, etc.

The application processor 203 in cooperation with the application memory 205 via the application memory controller 204 identifies and temporarily stores all items that will be displayed to the user in a browsable screen. This may for instance be a large collection of images. Amongst the items that will be displayed, the application processor identifies the items that meet the user's search criteria. The application processor 203 shares the items to be displayed as well as information identifying the items that meet the search criteria with the touch display controller 202.

The touch display controller 202 controls touch sensitive display 201 such that the items to be displayed become displayed in a browsable screen. The touch display controller 202 in other words instructs the touch sensitive display 201 to display a first page containing a first subset of items, e.g. the first 10 images. In order to change the subset of items that is displayed, the user must browse. Through wipes for instance, the user can instruct the touch display controller 202 to change the page and consequently also the subset of items that is displayed.

Amongst the items that are displayed, the touch display controller 202 further applies a foreshadow to items that match the user's search criteria. The foreshadow may be a single colour transparent visual mask that is laid over the item that is displayed. Alternatively, the foreshadow may have different colours depending on the extent to which an item meets the user's search criteria. An item that meets only part of the user's search criteria may for instance be foreground shaded in yellow whereas a green foreground shade may be applied to items that meet all search criteria of the user. The touch display controller 202 instructs the touch sensitive display 201 to display the items with the applied foreshadow. The visual foreshadow will make it easier for the user to discriminate relevant items that match his/her search criteria from other items when large collections of items have to be browsed.

In addition, the touch display controller 202 will variably adapt the browsing speed in function of the distance between the cursor or mouse pointer position and the next item marked with foreshadow. The closer the cursor or pointer comes to the next marked item, the more energy or wipes will be required to browse one or multiple pages. The user consequently experiences interaction slow down in moving from one page to the next pages on the touch display 201. Such slow down attracts his attention, enables to improve the focus and consequently increases the probability that a user will notice the next item with foreshadow that matches his/her search criteria.

In parallel, the interaction interface controller 206 will control a speaker 271 and tactile haptic interface element 272, e.g. a vibrating element, to produce an effect indicating to the user that he/she is approaching the next marked item in the browsable screen. The audio controller 261 that forms part of the interaction interface controller 206 shall for instance control the speaker 271 to produce an audible Doppler effect the frequency of which is increasing when the browsing distance to the next marked item in the browsable screen is reducing. Simultaneously, the tactile haptic interface controller 262 shall control the tactile haptic interface element 272 to vibrate with increasing frequency or increasing amplitude when the browsing distance to the next marked item in the screen is reducing. The foreshadow together with the hill effect, i.e. more browsing energy is required from the user to approach a marked item, further enhanced with tactile and/or audible feedback to the user minimizes the chances that a user browsing a large collection of items will miss an item matching his/her search criteria. This is achieved without requiring the user to switch between a full view or limited view as is the case with a zoom-in / zoom-out function.

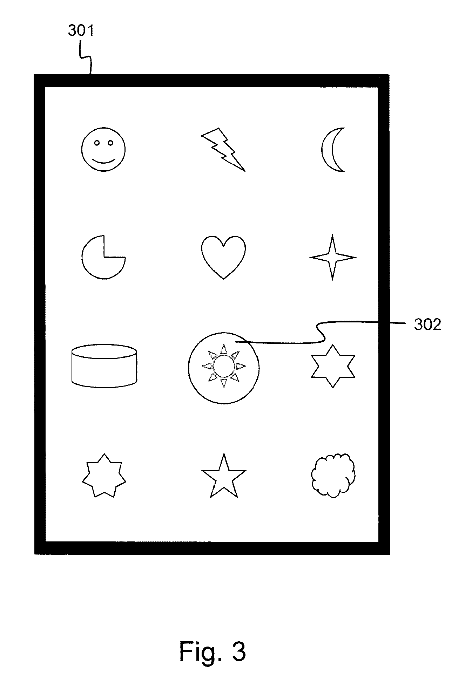

Fig. 3 shows a display 301, e.g. the LCD display 101 of Fig. 1 or the touch sensitive display 201 of Fig. 2, wherein a subset of items is displayed as part of a browsable screen. The browsable screen consists of a single page containing all items, browsable in vertical and/or horizontal direction, for instance through mouse scrolls or clicks. The browsable screen alternatively may consist of multiple pages containing subsets of items, browsable in vertical and/or horizontal direction, for instance through wipes along a touch sensitive display. The screen shown in Fig. 3 displays 12 items. One of the items, an image of the sun, matches the user's search criteria. To this image a foreshadow 302 is applied as a visual mark indicating that this image is of interest to the user. When approaching this image while browsing, a hill effect will be experienced. Hence, more browsing energy will be required to approach the marked image of the sun, i.e. more mouse scrolls or more wipes will be required to move the pointer or cursor closer to the marked image.

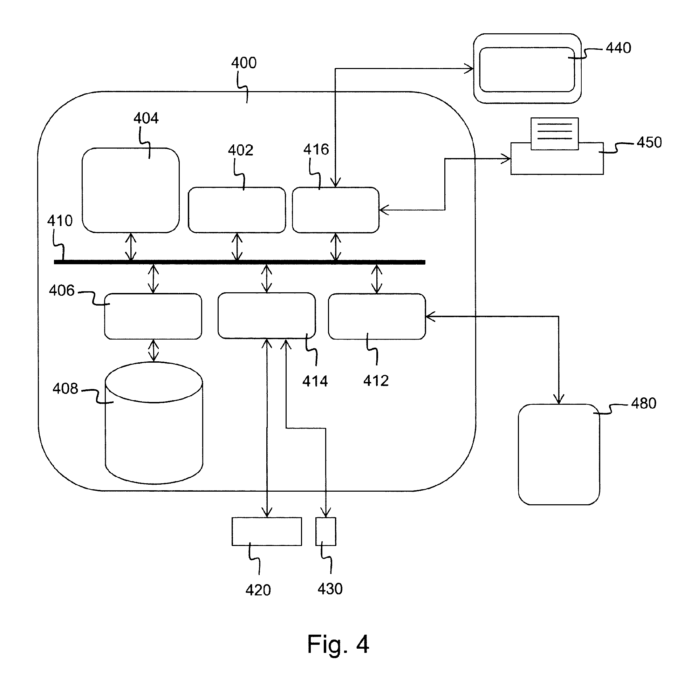

Fig. 4 shows a suitable computing system 400 for hosting one or more components of the user interface interaction system according to the invention. Computing system 400 may in general be formed as a suitable general purpose computer and comprise a bus 410, a processor 402, a local memory 404, one or more optional input interfaces 414, one or more optional output interfaces 416, a communication interface 412, a storage element interface 406 and one or more storage elements 408. Bus 410 may comprise one or more conductors that permit communication among the components of the computing system. Processor 402 may include any type of conventional processor or microprocessor that interprets and executes programming instructions. Local memory 404 may include a random access memory (RAM) or another type of dynamic storage device that stores information and instructions for execution by processor 402 and/or a read only memory (ROM) or another type of static storage device that stores static information and instructions for use by processor 404. Input interface 414 may comprise one or more conventional mechanisms that permit an operator to input information to the computing device 400, such as a keyboard 420, a mouse 430, a pen, voice recognition and/or biometric mechanisms, etc. Output interface 416 may comprise one or more conventional mechanisms that output information to the operator, such as a display 440, a printer 450, a speaker, etc. Communication interface 412 may comprise any transceiver-like mechanism such as for example two 1 Gb Ethernet interfaces that enables computing system 300 to communicate with other devices and/or systems, for example mechanisms for communicating with one or more other computing systems 480. The communication interface 412 of computing system 400 may be connected to such another computing system by means of a local area network (LAN) or a wide area network (WAN, such as for example the internet, in which case the other computing system 480 may for example comprise a suitable web server. Storage element interface 406 may comprise a storage interface such as for example a Serial Advanced Technology Attachment (SATA) interface or a Small Computer System Interface (SCSI) for connecting bus 410 to one or more storage elements 408, such as one or more local disks, for example 1TB SATA disk drives, and control the reading and writing of data to and/or from these storage elements 408. Although the storage elements 408 above is described as a local disk, in general any other suitable computer-readable media such as a removable magnetic disk, optical storage media such as a CD or DVD, -ROM disk, solid state drives, flash memory cards, ... could be used. The system 400 described above can also run as a Virtual Machine above the physical hardware.

The user interface interaction system 100 of Fig. 1 or 200 of Fig. 2 can be implemented as programming instructions stored in local memory 404 of the computing system 400 for execution by its processor 402. Alternatively the user interface interaction system 100 of Fig. 1 or 200 of Fig. 2 could be stored on the storage element 408 or be accessible from another computing system 480 through the communication interface 412.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A user interface interaction system (100; 200) comprising:
- an interface to a display (101; 201) configured to display items in a browsable screen;
- an interface to an application processor (103; 203) configured to receive search criteria;
- a display controller (102; 202) responsive to said application processor (103; 203) and configured to apply a foreshadow to items displayed in said browsable screen that meet said search criteria;
- said display controller (102; 202) being configured to variably adapt browse interaction in function of a distance, in a direction substantially equal to the browsing direction, between a pointer position in said browsable screen and an item position in said browsable screen of an item that meets said search criteria.

2. A user interface interaction system (100; 200) according to claim 1,
wherein said display controller (202) comprises a touchscreen controller adapted to reduce browse effect in said browsable screen per wipe if said distance between pointer position and item position is reducing.

3. A user interface interaction system (100; 200) according to claim 1,
wherein said display controller (102) comprises a screen controller adapted to reduce browse effect in said browsable screen per mouse scroll if said distance between pointer position and item position is reducing.

4. A user interface interaction system (100; 200) according to claim 1, further comprising:
an interaction interface controller (106; 206) comprising an audio controller (161; 261) adapted to produce an audible Doppler effect and to increase frequency of said audible effect if said distance between pointer position and item position is reducing.

5. A user interface interaction system (100; 200) according to claim 1, further comprising:
an interaction interface controller (106; 206) comprising a display controller adapted to produce a visible periodic alternating effect and to increase the frequency of said visible periodic alternating effect if said distance between pointer position and item position is reducing.

6. A user interface interaction system (100; 200) according to claim 1, further comprising:
an interaction interface controller (106; 206) comprising a tactile haptic controller (162; 262) adapted to produce tactile user feedback and to increase frequency of said tactile user feedback if said distance between pointer position and item position is reducing.

7. A method for user interface interaction, comprising:
- sending via an interface to a display (101; 201) instructions to display items in a browsable screen;
- receiving search criteria via an interface to an application processor (103; 203);
- applying a foreshadow to items that meet said search criteria; and
- variably adapting browse interaction in function of a distance, in a direction substantially equal to the browsing direction, between a pointer position in said browsable screen and an item position in said browsable screen of an item that meets said search criteria.

8. A data processing system (400) comprising means for carrying out the method of claim 7.

9. A computer program comprising software code adapted to perform the method of claim 7.

10. A computer readable storage medium (404) comprising the computer program of claim 9.
